# EUROPEAN PATENT APPLICATION

(11) **EP 3 640 865 A1**
(43) Date of publication of application: **22.04.2020**
(21) Application number: 18201227.8
(22) Date of filing: 18.10.2018
(51) Int. Cl.: G06Q 10/00

(54) **FORECAST MANAGEMENT IN ENERGY GRIDS**

(71) Applicant: Siemens Aktiengesellschaft, 80333 München (DE)
(72) Inventor: Sauer, Markus, 81739 München (DE); Zupan, Nejc, 80337 München (DE)

(57) **Abstract**

A method includes obtaining one or more state forecasts (154) provided by one or more forecast nodes (101) for configuring operation of an energy grid (200) during a forecast interval of the one or more state forecasts (154). The method also includes performing a comparison of the one or more state forecasts (154) with one or more state measurements (156) provided by one or more measurement nodes (201). The method further includes, based on the comparison: setting a trust level of at least one of the one or more forecast nodes (101) and the one or more measurement nodes (201).

## Description

### Technical Field

Various examples of the invention generally relate to techniques associated with state forecasts for energy grids. Various examples of the invention specifically relate to setting trust levels of one or more forecast nodes providing state forecasts.

### Background

State forecasts in energy systems are often used to plan and control the operation of energy grids. The operation of energy grids can include, e.g., energy production, storage, consumption, regulation. Forecasts are also used to plan purchase or selling of energy to other connected energy grids.

Typically, the state forecasts depend on predictions of consumption and production which in addition depends on environmental factors (e.g., solar power, wind power) and state measurements provided by measurement nodes.

It has been observed that the quality of the state measurements provided by measurement nodes can significantly vary. Sometimes, state measurements are comparably inaccurate. Then, also the accuracy of the associated state forecasts for the energy grid can suffer. This can result in inefficient operation of the energy grid.

### Summary

Accordingly, there is a need of advanced techniques of providing state forecasts in energy grids. Specifically, there is a need for techniques which overcome or mitigate at least some of the above-identified restrictions and drawbacks.

This need is met by the features of the independent claims. The features of the dependent claims define embodiments.

According to an example, a method includes configuring operation of an energy grid during a forecast interval of one or more state forecasts. The one or more state forecasts are provided by one or more forecast nodes. The method also includes performing a comparison of the one or more state forecasts with one or more state measurements. The one or more state measurements are provided by one or more measurement nodes of the energy grid. The method also includes, based on the comparison, setting a trust level of at least one of (*i*) the one or forecast nodes and (*ii*) the one or more measurement nodes.

A computer program, a computer program product, or a computer-readable storage media includes program code executable by at least one processor. Executing the program code causes at least one processor to perform a method. The method includes configuring operation of an energy grid during a forecast interval of one or more state forecasts. The one or more state forecasts are provided by one or more forecast nodes. The method also includes performing a comparison of the one or more state forecasts with one or more state measurements. The one or more state measurements are provided by one or more measurement nodes of the energy grid. The method also includes, based on the comparison, setting a trust level of at least one of (*i*) the one or forecast nodes and (*ii*) the one or more measurement nodes.

A node includes a processor circuitry. The processor circuitry is configured to obtain one or more state forecasts. The one or more state forecasts are provided by one or more forecast nodes for configuring operation of an energy grid during a forecast interval of the one or more state forecasts. The processor circuitry is further configured to perform a comparison of the one or more state forecasts with one or more state measurements. The one or more state measurements are provided by one or more measurement nodes. The processor circuitry is further configured to set a trust level of at least one of the one or more forecast nodes and the one or more measurement nodes.

For example, the node may be a database node of a distributed database system. Alternatively, or additionally, the node may be a communication node of a communication system.

By implementing the comparison between the one or more state forecasts with the one or more state measurements during the forecast interval, there can be provided in an audit of the quality of the one or more state forecasts and/or the one or more state measurements. Thereby, inaccuracies in the state forecasts and/or the state measurements may be detected. Such inaccuracies may be tracked by means of a reduced trust level.

For example,, it would be possible that the one or more state forecasts are associated with respective accuracy levels. Then, it would be possible that the comparison takes into account the respective accuracy levels.

Thereby, an uncertainty of the state forecasts can be effectively considered. For example, if the prediction interval - i.e., the time between generation of a state forecast and the forecast interval - is larger, then there may be a tendency towards a reduced accuracy level. Also, more complex energy grids may be more difficult to predict, thereby resulting in a reduced accuracy level. On the other hand, where an energy grid includes a large number of nodes, statistics may be more reliable and the accuracy level may increase. A tolerance headroom may be set in the comparison based on the accuracy level.

According to various examples, the accuracy level of the one or more state forecasts can be negotiated with the one or more forecast nodes.

Sometimes, such negotiation will help to obtain the appropriate state forecasts having the required accuracy. The negotiation could be implemented by means of a marketplace, e.g., implemented by a distributed database system (DBS). Thereby, the negotiation result can be tracked and tampering can be avoided.

As a general rule, the negotiation could be between the one or more forecast nodes and one or more processing nodes that can implement control of the operation of the energy grid.

As a general rule, such negotiation may not be limited to the accuracies associated with the one or more state forecasts.

For instance, alternatively or additionally, the one or more measurement nodes may be negotiated as well. For example, typically, there may be multiple candidate measurement nodes available for observing the state of the energy grid. In such a situation, the audit of the one or more state forecasts may be preferably implemented by a subset of all available candidate measurement nodes, e.g., because their ability to measure a certain observable can be better than the capability of other candidate measurement nodes to measure the certain observable. Hence, an accuracy level of the one or more state measurements can also be agreed upon.

According to various examples, the one or more state forecasts and/or the one or more state measurements can be logged in a DBS.

Thereby, a platform that is resilient against unauthorized data corruption can be provided. Generally, the trust level between the participating parties can thereby increase.

Specifically, it would be possible that the trust level is set employing a smart contract that is stored in a DBS. Here, the smart contract may be associated with entries of the one or more state forecasts in the one or more state measurements in the DBS. In such a scenario, the implementation of the auditing and tracking of the trust level of the fulfillment of the agreements with respect to the one or more state forecasts can be efficiently implemented. Specifically, this auditing and tracking of the fulfillment can be implemented in a tamper-prove manner.

Generally, the method may further include logging at least one of the trust level and the result of the comparison in the DBS. Then, also the result of an analysis of the accuracy of the state forecasts can be deposited in the DBS.

As a general rule, the DBS described throughout this disclosure be implemented using a distributed ledger. An example of a distributed ledger is the blockchain. Hereinafter, various techniques will be primarily described with respect to an implementation using the blockchain, for sake of simplicity. However, similar techniques may be readily applied to other kinds and types of distributed ledgers.

A blockchain is a replicated distributed ledger that verifies and stores transactions occurring in a peer-to-peer network. A blockchain does normally not rely on the operations of any central trusted authority. Instead, its trustworthiness is derived from the blockchain algorithm and optionally a incentive mechanisms for processing nodes in the network. Block-chains provide a decentralized protected mechanism of storing transactions. Examples of transactions include digital currency, smart contracts, and data in an internet of things application. The blockchain protects its entries in the respective distributed database (blocks) and the corresponding log of transactions against manipulations by using cryptography. A block carries a set of transactions. Each block points to its previous block by using a hash of the previous block. Because of this, manipulation a block by changing the information is not possible or only possible to a limited degree.

The method may also include providing a feedback indicative of the trust level and/or a result of the comparison to the one or forecast nodes. Thereby, the one or more forecast nodes can adapt their forecast mechanism, e.g., if the comparison yields a low quality of the respective state forecasts. The quality of the forecasts can be increased.

According to various examples, the method may further include selecting at least one trusted forecast node from the one or forecast nodes based on the respective trust levels. Alternatively, or additionally, one or more trusted measurement nodes may be selected from the one or more measurement notes based on the respective trust levels. In other words, white-listing and/or blacklisting may be implemented, thereby avoiding tampering or malfunction of the participating nodes. Untrusted nodes may be excluded for the future operation.

The method may further include selectively reconfiguring operation of an energy grid, based on the trust level. For example, where a low trust level is detected, a more conservative approach for energy consumption may be selected. Other conclusions may be drawn from a low or high trust level in other scenarios. This avoids misconfiguration of the energy grid.

The method may further include controlling release of a contract deposit of associated with the one or more state forecasts to the one or more forecast nodes based on the comparison. In other words, the contract deposit may serve as a guarantee or a bond for the accuracy of the state forecast. Then, in case the trust level is sufficient or in case the accuracy of the state forecast is sufficient, this contract deposit can be redeemed. This may serve as an incentive for the forecast nodes to provide an accurate state forecast, as well as to fulfill any agreements on the state forecasts. Thereby, inaccurate state forecasts are less likely to occur.

The one or more state forecasts can be associated with a load level of the energy grid. Alternatively, or additionally, the one or more state measurements can be associated with the load level of the energy grid. Other physical observables are conceivable for the one or more state forecasts and/or the one or more state measurements. For example, other states that could be addressed include: overhead energy; grid quality, e.g., in terms of frequency fluctuations or level fluctuations; number of connected energy sinks; number of connected energy sources; etc.

It is to be understood that the features mentioned above and those yet to be explained below may be used not only in the respective combinations indicated, but also in other combinations or in isolation without departing from the scope of the invention.

### Brief description of the drawings

FIG. 1 schematically illustrates a device according to various examples, wherein the device can implement a node of a DBS or a node of a communication system.
FIG. 2 schematically illustrates a communication system and an energy grid according to various examples.
FIG. 3 is a flowchart of a method according to various examples.
FIG. 4 is a flowchart of a method according to various examples.

### Detailed description of embodiments

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, various techniques with respect to state forecasts and energy grids are described. Various techniques are based on the finding that state forecasts can sometimes suffer in accuracy. As a general rule, there can be various reasons for the reduced accuracy of state forecasts, such as provisioning of the state forecasts by unsupervised third parties or provisioning of associated state measurements (hereinafter, simply measurements) by unsupervised third parties. Typically, these state forecasts (hereinafter, simply forecasts) are not validated based on certain measurements. The usage and purchase of the forecast service typically only relies on the implicit trust and observations by the purchaser and operator of the forecast system.

According to various examples, the forecast may be purchased on demand. The forecast may be associated with a promised quality level (accuracy level). Alternatively, or additionally, the forecast may be associated with measurement nodes for forecast validation. Predefined transactions may be executed if certain agreed accuracy levels are not reached.

According to various examples, this is made possible by using a DBS, e.g., implemented using blockchain technology, to generate an explicit trust between different parties, immutable stored agreement business logic, which provide transparency and guaranteed transaction execution.

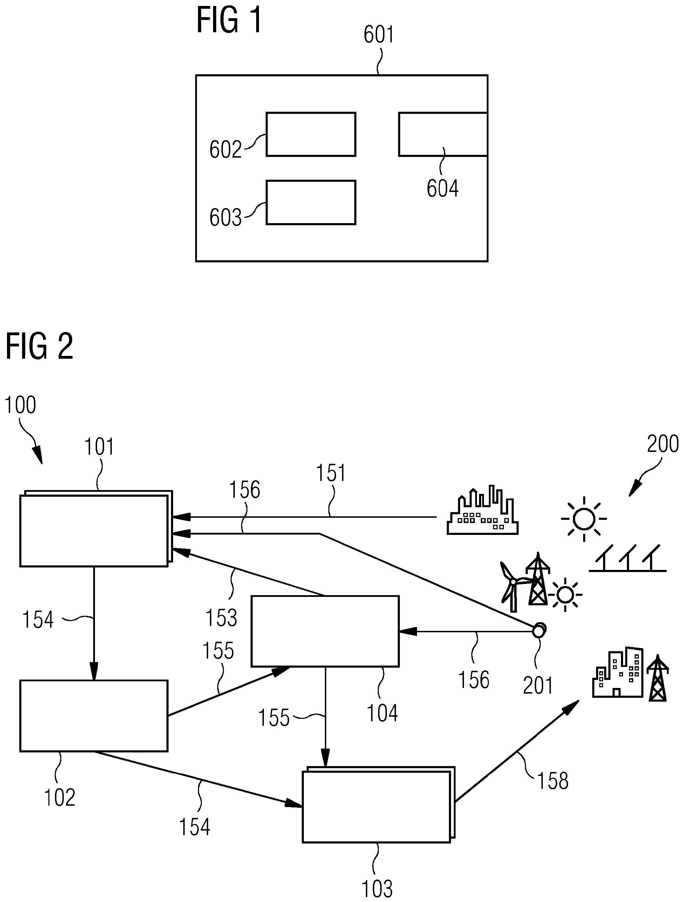

Turning to FIG. 1, there is illustrated an example device 601 that can be configured to perform the techniques described herein. For example, the device 601 can implement a node of a communication network or a node of a DBS. The device 601 may include one or processors 602 that can execute program code stored in a memory 603. Furthermore, the device 601 can include an interface 604 connected to a communication network via which information exchange with other participating nodes can be implemented.

The one or more processors 602 can execute the program code which can cause the one or more processors 602 to perform methods selected from the group comprising: performing a comparison between a forecast and at least one associated measurement of states of the energy grid; auditing the accuracy of a forecast; executing a smart contract deposit it in a transaction of a block of a blockchain; providing feedback on a result of the executed smart contract to one or more other nodes; etc.

FIG. 2 schematically illustrates a system 100 according to various examples. The system 100 might include an energy grid 200. As illustrated, the energy grid 200 includes various energy sources and sinks. There are also measurement nodes 201 associated with the energy grid.

The operation of the energy grid 200 is controlled by one or more processing nodes 103, by means of control data 158. The processing nodes 103 may implemented energy management functionality. Such control data 158 can generally instruct one or more nodes of the energy grid to provide or consume energy at a certain time. The operation of the energy grid is also subject to environmental factors (e.g. weather can influence wind turbine level of energy production).

Generally, the measurement nodes 201 can be realized by measurement devices (e.g. temperature sensor, solar radiation) and services which observe the current state and behavior of the energy grid. Depending on the type of the measurement node 201, the observed state (measurement 156) can be kept on the measurement node itself or reported to a DBS 104, e.g., as a signed transaction of a blockchain. As a general rule, there could be trusted (e.g. realized as Blockchain oracles) and untrusted measurement nodes.

One or more forecast nodes 101 can provide forecasts 154 of the state of the energy grid 200 to other participants. For this, the forecast nodes 101 can obtain the measurements 156 from the energy grid 200, e.g., measurements of the load etc.. The forecasts 154 can pertain to the load or, generally, any other observable of the energy grid 200 that is helpful in view of the operation control by the processing nodes 103.

As a general rule, it is possible that the forecasts 154 are associated with respective accuracy levels. These accuracy levels can pertain to a predicted variation of the forecasts 154.

The processing nodes 103 - e.g., implemented by a device 601 according to the example of FIG. 1 - can obtain these forecasts 154 for their needs of operating the energy grid 200, e.g., by transferring energy to and from other nodes. The processing nodes 103 may configure operation of the energy grid based on the forecasts as decision criterion

In the example of FIG. 2, the provisioning of the forecasts 154 is mediated via a marketplace node 102. The marketplace node 102 provides mechanisms for trading forecasts and negotiation agreements. The marketplace node 102 could be realized as part of the DBS 104, as external service, or any hybrid solution.

According to various examples, an agreement can be associated with the provisioning of the forecasts. Example elements of such an agreement can include: a certain quality level, prices for forecast accuracy levels, fines for wrong forecasts, and the measurement nodes. This agreement 155 can be stored in the DBS 104. Specifically, this means that the forecasts can be logged in the DBS 104.

Thus, in general it is possible that the accuracy level and/or fines and/or agreement deposits and/or the selection of the measurement nodes 201 are negotiated.

The DBS 104 can be configured for logging all kind of data such as the forecasts 154, the measurements 156, the accuracy level of the forecasts 154, the associated agreements, etc.. in an immutable way. The implementation of the DBS 104 could be a blockchain.

According to various examples, the agreement 155 can also be provided to the processing node 103.

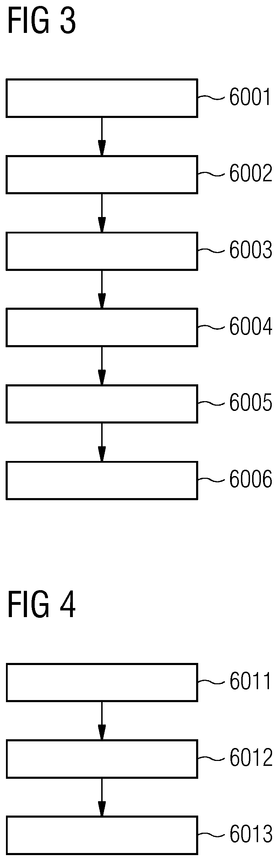

FIG. 3 is a flowchart of a method of various examples. The flowchart of FIG. 3 describes an example function of the system 100 of FIG. 2.

Block 6001: Physical System Behavior Observation - The state of the energy grid is measured by the measurement nodes 201. The measurement nodes 201 report the current state to the DBS 104, i.e., the measurements 156 are provided to the DBS 104. The measurements 156 could also be provided to the forecast nodes 101, to facilitate building of the forecasts. The measurements could also be proceeded to the processing nodes 103.

Block 6002: The forecast nodes 101 calculate forecasts based on system behavior observations (e.g. by data analytics, machine learning, human supported learning). This may include the measurements 156 or any other state data 151.

Block 6003: Offer Forecast - The forecast nodes 101 offer forecasts for a certain forecast time interval with certain quality level / accuracy promises (e.g. energy production in area x is predicted to y in the range of plus minus z). Such offering of the forecasts may be implemented via the marketplace node 102.

Thus, as a general rule it would be possible that the one or more forecasts are associated with a respective accuracy level. For example, by means of the marketplace node 102, it would be possible to negotiate the accuracy level of the one or more forecasts between the processing nodes 103 and the forecast nodes 101. A pricing scheme may be employed.

Block 6004: Agreement - The processing node 103 obtains a forecast via the marketplace 102. An associated agreement may specify trusted measurement nodes 201 which will be used for quality validation; these may be part of the negotiation. The agreement and the forecast may be stored in the DBS 104.

Block 6005. Operation and Execution - The processing node 103 operates according to the purchased forecast (e.g. sell, buys energy rights; reduces energy production plans; plans energy consumption).

Block 6006: Validation - Based on the agreement and the measurements 156 of the trusted measurement nodes 201, the quality of the forecast is continuously checked (e.g., was the forecast correct - within the accuracy level margins?) and related transactions stored in the agreement logic in the DBS 104 are automatically executed based on this forecast quality assessment.

Thus, generally a comparison may be performed between the forecasts 154 and the measurements 156, to validate the forecast. In the context of the comparison, it would also be possible to take into account accuracy levels associated with the one or more forecasts. For example, it would be possible to identify a limited quality of the forecast if the comparison yields a significant deviation between the forecast and the measurement, wherein "significant" is defined with respect to the accuracy level.

Based on such validation, a trust level of the one or more forecast nodes 101 can be set.

For instance, the validation - e.g., fulfillment of the agreement 155 and the quality of the forecast - can be continuously performed by implementation of the agreement 155 as self-executing agreement, e.g., as smart contract. The trust level may be set by the smart contract.

The trust level and/or the result of the comparison may be logged in the DBS 104, e.g., in a blockchain-based transaction.

This validation can be implemented by one or more database nodes of the DBS 104. The database nodes can again be implemented by a device 601 as described in FIG. 1.

Feedback data 153 can be provided to the forecast nodes 101. The feedback data 153 can be indicative of the fulfilment of the agreement 155.

Optionally, it would be possible to provide an indication of the trust level to the processing nodes 103. Then, it would be possible to selectively reconfigure the operation of the energy grid 200 based on the comparison or the trust level.

The trust level may optionally be fed back to the one or more feedback nodes 101 as feedback data 153, to thereby facilitate an adjustment of the forecast algorithm or the like.

The description of the operation of the system 100 given above in connection with FIG. 3 is an example. In other examples, variations are conceivable. Some conceivable variations of the operation of the system 100 are described below.

For example, measurements 156 from the measurement nodes 201 for forecasts can be read directly from the measurement nodes 201 by the forecasts nodes 101, but also written to the DBS 104 as signed transactions and then read by the forecast nodes 101 from the DBS 104.

In another example, the measurement node 201 performing the measurements during the forecast interval is owned by a third party, different from the owner of the forecast node 101.

In another example, the forecast node 101 has access to proprietary measurement nodes 201 which do not store their measurements to the DBS 104 and thus are not transparent to other participants in the system 100.

In another example the forecasts 154 are realized by human experts, crowdsourcing from humans, artificial intelligence, machine learning or any combination of those.

In another example, a deposit as payment (e.g., as tokens) is stored in the DBS 104 together with the reached forecast agreement, the quality levels, and payment ruleset. This deposit is then used to trigger payments based on the automatic validation from purchaser to forecast service provider operating the respective forecast node 101. Hence, generally, it would be possible to control the release of the contract deposit associated with the one or more forecasts based on the comparison of the one or more forecasts with the one or more measurements, or specifically based on the trust level.

In another example, a deposit is stored as fine budget via the DBS 104 by the forecast node 101, together with an agreement. This is then used to pay automatically a certain fine if certain quality agreements are not reached.

In another example the process of negotiating and reaching an agreement can be
performed by automatically acting agents (e.g. autonomously acting energy management
system) or semi-automatically (e.g. energy management system which acts according to a
certain parameter and target range provide manually by a human) or manually by a human
taking care about each agreement.

In another example, analytics results based on locally available data are traded.

FIG. 4 is a flowchart of a method according to various examples. For example, the method of FIG. 4 may be implemented by a device 601 as illustrated in FIG. 1. For instance, the method of FIG. 4 may be implemented when operating a database node of the DBS 104.

Initially, at block 6011, one or more state forecasts are obtained. The one more state forecasts are provided by one or forecast nodes. The one or more state forecasts are for configuring operation of an energy grid during a forecast interval of the one or forecasts.

For instance, as explained in connection with FIG. 2, the one or more state forecasts may be obtained as part of an agreement 155 from the marketplace 102. Alternatively or additionally, the one or more state forecasts may also be directly obtained from one or more forecast nodes 101.

Next, at block 6012, a comparison of the one or more state forecasts with one or more state measurements provided by one or measurement nodes is implemented. This facilitates tracking validity of the one or more forecasts. For example, if there is a deviation between a load level of the energy grid predicted by the one or more state forecasts and the actual load level as indicated by the one or measurements, then there may be limited validity of the one or more forecasts.

Next, at block 6013, a trust level is set based on the comparison of block 6012. The trust level is associated with the one or more forecast nodes and/or with the one or more measurement nodes.

Such techniques as described herein help to close the loop between forecast, actual system behavior, resulting forecast quality and guaranteed automatic execution of transactions based on the reached quality level with the forecast.

In more detail the advantages of the proposed system are the following:
Advantage 1. Wider selection of measurement nodes and streamlined forecast trading. With the marketplace in place, participants have ability to select between wider range of measurement nodes and forecast nodes. This selection can be based on a validated trust level, that can be obtained from the tracking of the accuracy of the forecasts over the past, as explained above.
Advantage 2. Transparency of forecast decisions, due to the audit trail of the measurements, all decisions taken in the operation of the energy grid are auditable on the DBS, together with the measurements that served as a base for them.
Advantage 3. Transparency of exchanging transactions, due to the immutable DBS. All agreements between a processing node and a forecast node are transparent and auditable on the blockchain.
Advantage 4. Establishing trust in a federated environment. Transparency of all decisions taken, together with the undisputable truth generates an implicit trust in the federated system.
Advantage 5. Constantly increasing forecast precision due to the built in feedback/incentivization system. By design all offered forecasts provide a quality metric and an agreement that was agreed upon by the forecast node and the processing node during the purchases, which serves as the feedback mechanism that with fines for forecast node if the quality level is not reached. This incentivizes the forecast node to perform in an optimal way.
Advantage 6. Automatic execution of reached agreements and corresponding transactions.
By design all forecast are validated against measurements during the forecast interval of the forecast, wherein the measurements relate to the energy grid. As the process is part of the reached agreement, automatic transactions are executed in a guaranteed way.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For instance, above, techniques have been described in which a forecast and a measurement is performed for an energy grid. However, as a general rule, it would be possible that forecasts and measurements are provided with respect to other industrial systems, e.g., railway networks, passenger transportation systems, etc.

## Claims

1. A method, comprising:
- obtaining one or more state forecasts (154) provided by one or more forecast nodes (101) for configuring operation of an energy grid (200) during a forecast interval of the one or more state forecasts (154),
- performing a comparison of the one or more state forecasts (154) with one or more state measurements (156) provided by one or more measurement nodes (201), and
- based on the comparison: setting a trust level of at least one of the one or more forecast nodes (101) and the one or more measurement nodes (201).

2. The method of claim 1,
wherein the one or more state forecasts (154) are associated with respective accuracy levels,
wherein the comparison takes into account the respective accuracy levels.

3. The method of claim 1 or 2, further comprising:
- negotiating an accuracy level of the one more state forecasts (154) with the one or more forecast nodes (101).

4. The method of any one of the preceding claims, further comprising:
- negotiating the one or more measurement nodes (201) with the one or more forecast nodes (101).

5. The method of any one of the preceding claims,
wherein at least one of the one or more state forecasts (154) and the one or more state measurements (156) are logged in a distributed database system (104).

6. The method of claim 5,
wherein the trust level is set employing a smart contract stored in the distributed database system (104).

7. The method of any one of the preceding claims, further comprising:
- logging at least one of the trust level and a result of the comparison in a distributed database system (104).

8. The method of any one of the preceding claims, further comprising:
- providing, to the one or more forecast nodes (101), a feedback (153) indicative of at least one of the trust level and a result of the comparison.

9. The method of any one of the preceding claims, further comprising:
- selecting at least one trusted forecast node from the one or more forecast nodes (101) based on the respective trust levels, and/or
- selecting at least one trusted measurement node from the one or more measurement nodes (201) based on the respective trust levels.

10. The method of any one of the preceding claims, further comprising:
- based on one the trust level: selectively reconfiguring operation of the energy grid (200).

11. The method of any one of the preceding claims, further comprising:
- controlling release of a contract deposit associated with the one or more state forecasts (154) to the one or more forecast nodes (101) based on the comparison.

12. The method of any one of the preceding claims,
wherein the one or more state forecasts (154) are associated with a load level of the energy grid (200), and/or
wherein the one or more state measurements (156) are associated with the load level of the energy grid (200).

13. A node comprising a processor circuitry configured to:
- obtain one or more state forecasts (154) provided by one or more forecast nodes (101) for configuring operation of an energy grid (200) during a forecast interval of the one or more state forecasts (154),
- perform a comparison of the one or more state forecasts (154) with one or more state measurements (156) provided by one or more measurement nodes (201), and
- based on the comparison: set a trust level of at least one of the one or more forecast nodes (101) and the one or more measurement nodes (201).

14. The node of claim 13,
wherein the node is a database node of a distributed database system (104).
